# EUROPÄISCHE PATENTSCHRIFT

(11) **EP 3 784 015 B1**
(45) Veröffentlichungstag und Bekanntmachung des Hinweises auf die Patenterteilung: **20.08.2025**
(21) Anmeldenummer: 19719771.8
(22) Anmeldetag: 10.04.2019
(51) Int. Cl.: A01B 63/00, A01B 33/02, A01B 33/06

(54) **ANBAUGERÄT**
ATTACHMENT
OUTIL RAPPORTÉ

(30) Priorität: 27.04.2018 DE 102018110206
(43) Veröffentlichungstag der Anmeldung: 03.03.2021
(73) Patentinhaber: PRINOTH GmbH, 88634 Herdwangen (DE)
(72) Erfinder: FETSCHER, Kai, 78253 Eigeltingen (DE); BRAUN, Daniel, 78315 Radolfzell (DE); HOSTI, Markus, 78333 Stockach (DE)
(74) Vertreter: Daub, Thomas
(86) Internationale Anmeldenummer: PCT/EP2019/059155
(87) Internationale Veröffentlichungsnummer: WO 2019/206643

(56) Entgegenhaltungen:
- EP-A1- 1 344 443
- EP-A1- 2 556 735
- EP-A2- 3 243 367
- WO-A1-2017/167685
- DE-A1- 102005 005 557

## Beschreibung

Die Erfindung betrifft ein Anbaugerät nach dem Oberbegriff des Anspruchs 1 und ein Verfahren zum Betrieb eines Anbaugeräts nach dem Oberbegriff des Anspruchs 14. Aus der EP 1 344 443 A1 ist ein solches Anbaugerät gemäß dem Oberbegriff des Anspruchs 1 bekannt. Aus dem Stand der Technik ist des Weiteren bereits ein Mulcher zur Verwendung mit einem Trägerfahrzeug, beispielsweise einem Traktor, bekannt. Dieser Mulcher weist einen Hydraulikmotor mit einem maximalen und einem minimalen Schluckvolumen auf und ist über eine Hydraulikversorgung des Trägerfahrzeugs antreibbar. Das maximale Schluckvolumen und das minimale Schluckvolumen werden im Anschluss an eine Montage des Mulchers an dem Trägerfahrzeug und vor einer Inbetriebnahme des Trägerfahrzeugs und Mulchers manuell eingestellt und sind während der Verwendung des Mulchers unveränderlich. Eine nicht optimale Einstellung des minimalen und/oder maximalen Schluckvolumens kann eine Leistungsminderung des Mulchers zur Folge haben. Ferner muss für jede Änderung des minimalen und/oder maximalen Schluckvolumens ein Betriebszustand des Mulchers und Trägerfahrzeugs unterbrochen und von Fachpersonal eine manuelle Verstellung des minimalen und/oder maximalen Schluckvolumens durchgeführt werden. Hierbei muss jedes Mal ein Zerkleinerungsrotor des Mulchers zum Stillstand gebracht und anschließend wieder angefahren und auf eine Nenndrehzahl gebracht werden. Wird der Mulcher durch zu zerkleinerndes Material während des Betriebszustands gebremst, steigt ein Eingangsdruck des Trägerfahrzeugs. Bei einer Überschreitung eines Schwelldrucks durch den Eingangsdruck wird das Schluckvolumen des Hydraulikmotors hydraulisch verändert und steigt von dem minimalen Schluckvolumen bis zu dem maximalen Schluckvolumen. Hierdurch wird eine Drehzahl des Mulchers verringert und ein Drehmoment, welches der Hydraulikmotor des Mulchers bereitstellt, erhöht, um ein effektives Zerkleinern des Materials zu gewährleisten.

Die Aufgabe der Erfindung besteht insbesondere darin, eine gattungsgemäße Vorrichtung mit verbesserten Eigenschaften hinsichtlich einer einfacheren und/oder schnellen Inbetriebnahme bereitzustellen. Die Aufgabe wird erfindungsgemäß durch die Merkmale der Patentansprüche 1 und 14 gelöst, während vorteilhafte Ausgestaltungen und Weiterbildungen der Erfindung den Unteransprüchen entnommen werden können.

Die Erfindung geht aus von einem Anbaugerät, insbesondere einer Fräse und/oder einem Mulcher, zur Verwendung mit einem Trägerfahrzeug, mit zumindest einer Funktionseinheit, welche zu einer Energieversorgung durch das Trägerfahrzeug vorgesehen ist.

Es wird vorgeschlagen, dass das Anbaugerät zumindest eine Steuereinheit, insbesondere eine Steuer- und/oder Regeleinheit, aufweist, welche in zumindest einem Betriebszustand zumindest einen Grenzwert eines Betriebsparameters der Funktionseinheit automatisch steuert und/oder regelt. Hierdurch kann vorteilhaft eine einfache und/oder schnelle Inbetriebnahme erreicht werden. Vorteilhaft können manuelle Vorgänge und/oder Fachpersonal zu einer Einstellung und/oder Regelung des Grenzwerts entfallen, wodurch insbesondere Kosten eingespart werden können. Besonders vorteilhaft kann ein Wechsel und/oder eine Inbetriebnahme des Anbaugeräts und/oder Trägerfahrzeugs schnell und einfach durchgeführt werden. Zudem kann das Anbaugerät mit optimalen Einstellungen zur Erzielung einer Leistungsoptimierung betrieben werden.

Unter einem "Anbaugerät" soll insbesondere ein Gerät verstanden werden, welches dazu vorgesehen ist, zumindest eine vordefinierte Funktion mittels seiner Funktionseinheit bereitzustellen und an ein Trägerfahrzeug, insbesondere an verschiedene Trägerfahrzeuge, insbesondere verschiedenen Typs, montiert werden kann. Bei dem Anbaugerät kann es sich beispielsweise um ein beliebiges, dem Fachmann als sinnvoll erscheinendes bauwirtschaftliches und/oder landwirtschaftliches und/oder vorzugsweise forstwirtschaftliches Anbaugerät handeln, insbesondere um eine Zange und/oder einen Greifer und/oder eine Ramme und/oder eine Säge und/oder Mäher und/oder vorzugsweise um eine Fräse, insbesondere eine Asphaltfräse und/oder eine Stockfräse und/oder eine Rodefräse und/oder eine Schneefräse und/oder eine Mulchfräse handeln. Unter einer "Funktionseinheit" soll insbesondere eine Einheit verstanden werden, welche die vordefinierte Funktion des Anbaugeräts ausführt. Die Funktionseinheit kann beispielsweise zumindest ein Sägeblatt und/oder ein Fräswerkzeug und/oder ein Schneidwerkzeug und/oder einen Rotor, insbesondere einen Zerkleinerungsrotor, und/oder einen Greifarm und/oder einen Rammbock und/oder eine Zange aufweisen.

Unter einem "Trägerfahrzeug" soll insbesondere ein Fahrzeug verstanden werden, welches dazu vorgesehen ist, mit zumindest einem Anbaugerät zu einer Ausführung einer Funktion des Anbaugeräts ausgestattet zu werden. Insbesondere kann das Anbaugerät von einem Trägerfahrzeug gezogen, geschoben, getragen, angehoben, abgesenkt und/oder geschwenkt werden. Das Trägerfahrzeug weist bevorzugt zumindest eine Lagereinheit auf, welche dazu vorgesehen ist, das Anbaugerät an dem Trägerfahrzeug zu lagern. In einem montierten Zustand bildet die Lagereinheit vorteilhaft mit zumindest einem korrespondierenden Lagermittel des Anbaugeräts zumindest einen gemeinsamen Formschluss aus. Bei dem Trägerfahrzeug kann es sich insbesondere um ein Fahrzeug zur Landschaftspflege, um ein Schneeräumfahrzeug, um ein Landwirtschaftsfahrzeug, um ein Baufahrzeug und/oder um ein anderes, zu einer Verwendung mit dem Anbaugerät geeignetes Fahrzeug handeln. Vorzugsweise handelt es sich bei dem Trägerfahrzeug um einen Traktor und/oder ein Raupenfahrzeug und/oder einen Bagger und/oder einen Radlader und/oder einen Kompaktlader.

Darunter, dass die Funktionseinheit "zu einer Energieversorgung durch das Trägerfahrzeug vorgesehen ist" soll insbesondere verstanden werden, dass die Funktionseinheit zu einer Ausführung der Funktion zumindest eine Art von Energie benötigt, welche das Trägerfahrzeug in dem Betriebszustand bereitstellt. Insbesondere kann die Energie elektrische, mechanische und/oder hydraulische Energie aufweisen. Insbesondere weist das Trägerfahrzeug eine Versorgungseinheit zur Versorgung des Anbaugeräts mit Energie auf, und zwar insbesondere eine mechanische, hydraulische, pneumatische und/oder elektrische Energieversorgungseinheit. Das Trägerfahrzeug weist vorteilhaft zumindest eine Verbindungseinheit auf, welche zu einer Übertragung von Energie von dem Trägerfahrzeug an die Funktionseinheit vorgesehen ist. Die Verbindungseinheit kann insbesondere zumindest eine elektrische Leitung und/oder vorzugsweise zumindest einen Schlauch aufweisen. Beispielsweise kann das Anbaugerät, insbesondere die Funktionseinheit, zumindest einen Hydraulikmotor aufweisen, welcher über eine Hydraulikversorgungseinheit des Trägerfahrzeugs antreibbar ist.

Unter einem "Hydraulikmotor" soll insbesondere eine Einheit verstanden werden, welche in zumindest einem Betriebszustand zumindest eine hydraulische Energie in zumindest eine mechanische Energie umwandelt. Insbesondere weist der Hydraulikmotor zumindest eine Übersetzungseinheit zur Überführung der hydraulischen Energie in die mechanische Energie auf. Vorteilhaft weist das Anbaugerät zumindest eine Energieübertragungseinheit auf, welche dazu vorgesehen ist, die mechanische Energie an eine weitere Einheit der Funktionseinheit zu übertragen. Beispielsweise könnte die Energieübertragungseinheit zumindest einen Zugmitteltrieb, beispielsweise ein Riemengetriebe, und/oder ein Kolbengetriebe und/oder ein Zahnradgetriebe aufweisen. Vorteilhaft weist die Versorgungseinheit des Trägerfahrzeugs zu einer Versorgung des Hydraulikmotors mit der hydraulischen Energie zumindest eine Hydraulikpumpe auf, welche beispielsweise elektrisch und/oder vorzugsweise mittels eines Verbrennungsmotors des Trägerfahrzeugs antreibbar sein kann.

Unter einem "Grenzwert eines Betriebsparameters" soll insbesondere ein vordefinierter Wert des Betriebsparameters verstanden werden, welcher in dem Betriebszustand nicht weiter reduzierbar und/oder erhöhbar ist und/oder basierend auf welchem die Steuereinheit zumindest einen vordefinierten Prozess einleitet, sollte der Wert überschritten und/oder unterschritten sein. Insbesondere kann der Grenzwert ein Maximum, ein Minimum und/oder einen Schwellwert umfassen.

Unter einem "automatisch" durchgeführten Vorgang soll insbesondere ein Vorgang verstanden werden, welcher während seines Ablaufs selbständig und insbesondere ohne eine Bedienhandlung eines Bedieners, abläuft. Insbesondere kann der Bediener zumindest eine manuelle Starthandlung zu einer Aktivierung des automatischen Vorgangs durchführen. Vorteilhaft kann der Bediener eine Stopphandlung zu einem Unterbrechen und/oder Anhalten des automatischen Vorgangs durchführen.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass die Steuereinheit den Grenzwert des Betriebsparameters der Funktionseinheit und/oder den Betriebsparameter der Funktionseinheit in dem Betriebszustand elektrisch steuert und/oder regelt. Vorteilhaft umfasst die Steuereinheit zumindest einen Algorithmus, gemäß welchem die Steuereinheit den Grenzwert des Betriebsparameters in dem Betriebszustand steuert und/oder regelt. Vorteilhaft bestimmt der Algorithmus einen optimalen Grenzwert des Parameters und/oder einen optimalen momentanen Wert des Betriebsparameters insbesondere zu einer Maximierung einer Leistung der Funktionseinheit. Hierdurch kann insbesondere auf eine mechanische Steuerung und/oder Regelung des Grenzwerts verzichtet werden. Vorteilhaft kann eine Genauigkeit und/oder Geschwindigkeit der Steuerung und/oder Regelung des Grenzwerts und/oder des Betriebsparameters verbessert werden. Besonders vorteilhaft kann hierdurch gewährleistet werden, dass dem Anbaugerät stets eine maximale Leistung bereitgestellt werden kann. Ferner können zusätzliche Vorgänge zu einer Einstellung eines Schwelldrucks, ab dem die Steuereinheit den Grenzwert des Betriebsparameters gesteuert und/oder geregelt, entfallen und auf jegliche Änderungen des Eingangsdrucks und/oder der Drehzahl sofort reagiert werden.

Weiterhin wird vorgeschlagen, dass die Steuereinheit in dem Betriebszustand den Grenzwert des Betriebsparameters der Funktionseinheit auf einen Sollwert steuert und/oder regelt. Unter einem "Sollwert" soll insbesondere ein Wert verstanden werden, welcher als ein gewünschter Wert festgelegt ist. Vorteilhaft steuert und/oder regelt die Steuereinheit einen momentanen Wert im Falle einer Abweichung von dem Sollwert auf den Sollwert. Insbesondere ist der Sollwert durch zumindest einen Betriebsparameter definiert. Vorteilhaft erkennt die Steuereinheit den Sollwert automatisch. Bevorzugt ist der Sollwert durch zumindest einen Eingangsdruck des Trägerfahrzeugs und/oder zumindest eine Drehzahl wenigstens einer Einheit des Anbaugeräts definiert. Besonders bevorzugt dient der Sollwert einer Optimierung einer Leistung der Funktionseinheit. Denkbar ist, dass ein Bediener den Sollwert einstellen könnte. Vorteilhaft erfolgt jedoch eine Einstellung des Sollwerts automatisch durch die Steuereinheit. Hierdurch kann insbesondere eine hohe Leistung der Funktionseinheit erreicht werden. Vorteilhaft kann bei einer Änderung von zumindest einem Betriebsparameter der Sollwert automatisch an einen geänderten Betriebsparameter angepasst werden.

Darüber hinaus wird vorgeschlagen, dass die Steuereinheit in dem Betriebszustand durch eine Steuerung und/oder Regelung des Grenzwerts des Betriebsparameters der Funktionseinheit einen weiteren Betriebsparameter der Funktionseinheit steuert und/oder regelt. Insbesondere kann der weitere Betriebsparameter eine Leistung, ein Druck und/oder eine Drehzahl des Anbaugeräts sein. Vorteilhaft ist der Sollwert der Grenze des Betriebsparameters durch zumindest einen weiteren Sollwert des weiteren Betriebsparameters definiert. Bevorzugt ist der weitere Sollwert des weiteren Betriebsparameters als eine vordefinierte Nenndrehzahl des Anbaugeräts ausgebildet. Beispielsweise könnte die Nenndrehzahl bei einer Herstellung des Anbaugeräts definiert werden. Besonders bevorzugt ist der Sollwert des Grenzwerts als ein Wert des Betriebsparameters definiert, bei dem das Anbaugerät die Nenndrehzahl aufweist. Hierdurch kann insbesondere eine Steuerung und/oder Regelung des weiteren Betriebsparameters auf einfache Weise bereitgestellt werden.

Außerdem wird vorgeschlagen, dass das Anbaugerät zumindest eine Sensoreinheit, insbesondere eine funktionseinheitszugeordnete Sensoreinheit, zur Erfassung zumindest eines Werts zumindest eines Betriebsparameters, insbesondere des weiteren Betriebsparameters, der Funktionseinheit aufweist, wobei die Sensoreinheit in dem Betriebszustand diesen Wert der Steuereinheit zu einer Verarbeitung bereitstellt. Beispielsweise kann der Wert des Betriebsparameters eine Drehzahl des Anbaugeräts umfassen. Vorteilhaft weist das Anbaugerät zumindest eine Übertragungseinheit zu einer Übertragung des erfassten Werts von der Sensoreinheit an die Steuereinheit auf. Die Übertragungseinheit kann beispielsweise ein Kabel und/oder einen Datenbus und/oder eine Antenne und/oder einen Funksender und/oder einen Radiosender aufweisen. Unter einer "Verarbeitung" soll in diesem Zusammenhang insbesondere ein Vorgang verstanden werden, bei welchem die Steuereinheit den Wert mit zumindest einem Sollwert und/oder zumindest einem weiteren Wert eines weiteren Betriebsparameters vergleicht und insbesondere anhand des Vergleichs zumindest einen weiteren Prozess, beispielsweise ein Erhöhen und/oder ein Senken des Werts, einleitet. Hierdurch kann insbesondere ein Steuern und/oder Regeln des Grenzwerts vereinfacht werden. Vorteilhaft kann der erfasste Wert bei einer Festlegung des Sollwerts des Grenzwerts mitwirken. Ferner kann auf externe Sensoreinheiten zu einer Erfassung des Werts verzichtet werden.

Ferner wird vorgeschlagen, dass das Anbaugerät zumindest eine Sensoreinheit, insbesondere eine trägerfahrzeugzugeordnete Sensoreinheit, zur Erfassung zumindest eines Werts zumindest eines Betriebsparameters des Trägerfahrzeugs aufweist, wobei die Sensoreinheit in dem Betriebszustand diesen Wert der Steuereinheit zu einer Verarbeitung bereitstellt. Beispielsweise kann der Wert des Betriebsparameters einen Eingangsdruck des Trägerfahrzeugs umfassen. Vorteilhaft weist das Anbaugerät zumindest eine Übertragungseinheit zu einer Übertragung des erfassten Werts von der Sensoreinheit an die Steuereinheit auf. Die Übertragungseinheit kann beispielsweise ein Kabel und/oder einen Datenbus und/oder eine Antenne und/oder einen Funksender und/oder einen Radiosender aufweisen. Hierdurch kann insbesondere ein Steuern und/oder Regeln des Grenzwerts vereinfacht werden. Vorteilhaft kann bei einem Wechsel des Trägerfahrzeugs eine einfache und schnelle Einstellung des Anbaugeräts auf ein neues Trägerfahrzeug erreicht werden.

Insbesondere kann das Anbaugerät eine Sensoreinheit aufweisen, welche die funktionseinheitszugeordnete Sensoreinheit und die trägerfahrzeugzugeordnete Sensoreinheit umfasst, wodurch eine Konstruktion vorteilhaft vereinfacht werden kann.

Vorteilhaft weist die Sensoreinheit, insbesondere die funktionseinheitszugeordnete und/oder die trägerfahrzeugzugeordnete Sensoreinheit, zumindest eine Drehzahlerfassungseinheit auf. Vorteilhaft weist die Drehzahlerfassungseinheit zumindest eine Lichtschranke und/oder zumindest einen Beschleunigungssensor und/oder zumindest einen Vibrationssensor und/oder zumindest ein Mikrofon auf. Bevorzugt weist die Sensoreinheit, analog zu gängigen, in Fahrzeugen verwendeten Drehzahlmessern, zumindest einen Hall-Sensor auf. Hierdurch kann insbesondere eine Erfassung der Drehzahl des Anbaugeräts und eine Festlegung des Sollwerts des Grenzwerts erreicht werden. Vorteilhaft kann auf externe Sensoreinheiten zu einer Erfassung der Drehzahl des Anbaugeräts verzichtet werden.

Ferner wird vorgeschlagen, dass die Sensoreinheit, insbesondere die funktionseinheitszugeordnete und/oder die trägerfahrzeugzugeordnete Sensoreinheit, zumindest eine Druckerfassungseinheit aufweist. Vorteilhaft weist die Druckerfassungseinheit zumindest einen piezoelektrischen Sensor und/oder einen Dehnungsmessstreifen und/oder ein gewickeltes Federelement analog zu gängigen Rohrfedermanometern auf. Bevorzugt weist die Druckerfassungseinheit, insbesondere zu einer Dämpfung von Vibrationen, zumindest ein Dämpfungsfluid auf. Das Dämpfungsfluid kann insbesondere zumindest ein Öl aufweisen. Hierdurch kann insbesondere eine Erfassung des Eingangsdrucks des Trägerfahrzeugs und eine Festlegung des Sollwerts des Grenzwerts erreicht werden. Vorteilhaft kann auf externe Sensoreinheiten zu einer Erfassung des Eingangsdrucks des Trägerfahrzeugs verzichtet werden.

Vorteilhaft weist die Funktionseinheit zumindest einen Axialkolbenverstellmotor auf. Unter einem "Axialkolbenverstellmotor" soll insbesondere ein Hydraulikmotor verstanden werden, welcher dazu vorgesehen ist, eine von einer hydraulischen Energie umgewandelte mechanische Energie durch zumindest ein Drehmoment zu übertragen und welcher ein variables Schluckvolumen aufweist. Unter einem "Schluckvolumen" soll insbesondere ein Volumen eines Hydraulikfluids verstanden werden, welches der Axialkolbenverstellmotor in einer einmaligen Umdrehung bewegt. Unter einem "Hydraulikfluid" soll insbesondere ein Fluid verstanden werden, welches dazu vorgesehen ist, hydraulische Energie aufzunehmen und zu einer Umwandlung der hydraulischen Energie in mechanische Energie abzugeben. Bevorzugt weist das Hydraulikfluid eine Viskosität, die es dem Hydraulikfluid erlaubt, gepumpt zu werden. Insbesondere weist das Hydraulikfluid zumindest ein Öl auf. Insbesondere ist das Schluckvolumen bei einer konstanten vom Trägerfahrzeug bereitgestellten Hydraulikfluidmenge antiproportional zu einer Drehzahl des Axialkolbenverstellmotors und insbesondere proportional zu einem Drehmoment des Axialkolbenerstellmotors. Vorteilhaft weist der Axialkolbenverstellmotor ein minimales Schluckvolumen und zumindest ein maximales Schluckvolumen auf. Hierdurch kann insbesondere eine Leistung der Funktionseinheit, insbesondere gegenüber Anbaugeräten, welche Hydraulikmotoren mit einem festen Schluckvolumen aufweisen, verbessert werden. Vorteilhaft kann abhängig von einer Belastung des Anbaugeräts das Schluckvolumen verändert werden, um ein an die Belastung angepasstes Drehmoment der Funktionseinheit zu erreichen.

Vorteilhaft ist der Grenzwert des Betriebsparameters der Funktionseinheit als ein minimales oder maximales Schluckvolumen des Axialkolbenverstellmotors ausgebildet. Insbesondere ist das minimale Schluckvolumen ein Schluckvolumen, bei welchem in einem belastungsfreien Zustand des Anbaugeräts der Rotor die vordefinierte Nenndrehzahl aufweist. Insbesondere ist das maximale Schluckvolumen durch eine maximale Hydraulikfluidkapazität des Anbaugeräts definiert. Bevorzugt steuert und/oder regelt die Steuereinheit bei einer Inbetriebnahme des Anbaugeräts ein Schluckvolumen des Anbaugeräts von dem maximalen Schluckvolumen bis zu dem minimalen Schluckvolumen. Besonders bevorzugt ermittelt die Steuereinheit einen Wert des minimalen Schluckvolumens anhand zumindest einer von der Sensoreinheit ermittelten Information. Beispielsweise könnte die Information die Drehzahl des Anbaugeräts aufweisen. Insbesondere ist die Drehzahl antiproportional zu dem Schluckvolumen. Bevorzugt überwacht die Steuereinheit während einer Steuerung und/oder Regelung des Schluckvolumens von dem maximalen Schluckvolumen zu dem minimalen Schluckvolumen die Drehzahl des Anbaugeräts. Besonders bevorzugt stoppt die Steuereinheit die Steuerung und/oder Regelung des Schluckvolumens bei einem Erreichen der vordefinierten Nenndrehzahl durch die Drehzahl und steuert und/oder regelt das minimale Schluckvolumen auf das momentan eingestellte Schluckvolumen. In einer alternativen Ausgestaltung könnte der Algorithmus den Wert des minimalen Schluckvolumens bei der ersten Inbetriebnahme des Anbaugeräts die Information der Sensoreinheit und die Nenndrehzahl zu einer Ermittlung des minimalen Schluckvolumens verwenden. Insbesondere steuert und/oder regelt die Steuereinheit das minimale Schluckvolumen auf den Wert. Vorteilhaft überwacht die Steuereinheit in dem Betriebszustand den Wert und steuert und/oder regelt das minimale Schluckvolumen bei einer Änderung des Werts zu einem neuen Wert in dem Betriebszustand auf den neuen Wert. Hierdurch kann insbesondere eine hohe Leistung des Axialkolbenverstellmotors, insbesondere gegenüber Axialkolbenverstellmotoren ohne eine automatische Steuerung und/oder Regelung des minimalen und/oder maximalen Schluckvolumens, erreicht werden. Vorteilhaft kann die Steuerung und/oder Regelung des minimalen und/oder maximalen Schluckvolumens in sämtlichen Betriebszuständen des Anbaugeräts erfolgen.

In einer weiteren Ausgestaltung der Erfindung wird vorgeschlagen, dass die Funktionseinheit zumindest einen Elektromotor aufweist und der Grenzwert des Betriebsparameters ein elektrischer Grenzwert ist. Unter einem "Elektromotor" soll insbesondere eine Einheit verstanden werden, welche in zumindest einem Betriebszustand zumindest eine elektrische Energie in zumindest eine mechanische Energie umwandelt. Insbesondere weist der Elektromotor zumindest einen Rotor und zumindest einen Stator auf. Der Betriebsparameter kann beispielsweise als ein elektrischer Strom, insbesondere ein Effektivstrom und/oder ein Spitzenstrom, eine elektrische Spannung, insbesondere eine Effektivspannung und/oder eine Spitzenspannung, und/oder eine elektrische Leistung ausgebildet sein. Hierdurch kann insbesondere eine hohe Robustheit der Funktionseinheit erreicht werden. Vorteilhaft könnten bewegliche Bauteile, wie Hydraulikfluid und/oder Kolben und/oder Getriebe entfallen. Besonders vorteilhaft kann eine Flexibilität der Funktionseinheit erreicht werden. Insbesondere kann eine minimale Verzögerung zwischen einer Einstellungshandlung und einer Einstellung de erreicht werden.

Bevorzugt weist die Funktionseinheit zumindest eine Zerkleinerungseinheit, insbesondere einen Zerkleinerungsrotor, auf. Unter einer "Zerkleinerungseinheit", insbesondere einem "Zerkleinerungsrotor", soll insbesondere eine Einheit verstanden werden, welche dazu vorgesehen ist, zumindest ein Material zu zerkleinern, insbesondere in Stücke kleiner als 10 cm³, vorteilhaft kleiner als 8 cm³, besonders vorteilhaft kleiner als 6 cm³, bevorzugt kleiner als 4 cm³ und besonders bevorzugt kleiner als 2 cm³. Das Material könnte beispielsweise Schnee und/oder Erde aufweisen, bevorzugt weist das Material zumindest ein pflanzliches Material, wie beispielsweise Gras und/oder Holz, auf. Die Zerkleinerungseinheit zerkleinert das Material insbesondere durch ein Einwirken einer mechanischen Kraft, bevorzugt eines Drehmoments. Beispielsweise könnte die Zerkleinerungseinheit zumindest einen Rotor aufweisen, auf welchem zumindest ein Schneidwerkzeug zu einem Zerkleinern von Material angeordnet ist. Insbesondere könnte der Rotor eine Haupterstreckungsrichtung aufweisen, die in zumindest einem Betriebszustand parallel zu einer Schwerkraftrichtung ausgerichtet ist. Bevorzugt weist der Rotor eine Haupterstreckungsrichtung auf, die in dem Betriebszustand senkrecht zu einer Schwerkraftrichtung ausgerichtet ist. Hierdurch kann insbesondere eine einfache Zerkleinerung von Material erreicht werden. Vorteilhaft kann ein Wechsel und/oder eine Inbetriebnahme des Anbaugeräts zu einer Zerkleinerung von Material schnell und einfach durchgeführt werden.

Die Erfindung geht ferner aus von einem Verfahren zum Betrieb eines Anbaugeräts mit zumindest einer Funktionseinheit, welche von einem Trägerfahrzeug mit Energie versorgt wird.

Es wird vorgeschlagen, dass zumindest ein Grenzwert eines Betriebsparameters der Funktionseinheit automatisch gesteuert und/oder geregelt wird, wodurch vorteilhaft eine einfache und/oder schnelle Inbetriebnahme erreicht werden kann. Vorteilhaft können manuelle Vorgänge und/oder Fachpersonal zu einer Einstellung und/oder Regelung des Grenzwerts entfallen, wodurch insbesondere Kosten eingespart werden können. Besonders vorteilhaft kann ein Wechsel und/oder eine Inbetriebnahme des Anbaugeräts und/oder Trägerfahrzeugs schnell und einfach durchgeführt werden. Zudem kann das Anbaugerät mit optimalen Einstellungen zur Erzielung einer Leistungsoptimierung betrieben werden.

Weitere Vorteile ergeben sich aus der folgenden Zeichnungsbeschreibung. In der Zeichnung sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein System mit einem Trägerfahrzeug und einem Anbaugerät in einer schematischen Darstellung,
- Fig. 2: einen Teil des Anbaugeräts in einer näheren, schematischen Darstellung,
- Fig. 3: ein schematisches Verlaufsdiagramm eines Verfahrens zu einem Betrieb des Anbaugeräts und
- Fig. 4: einen Teil eines weiteren Anbaugeräts in einer näheren schematischen Darstellung.

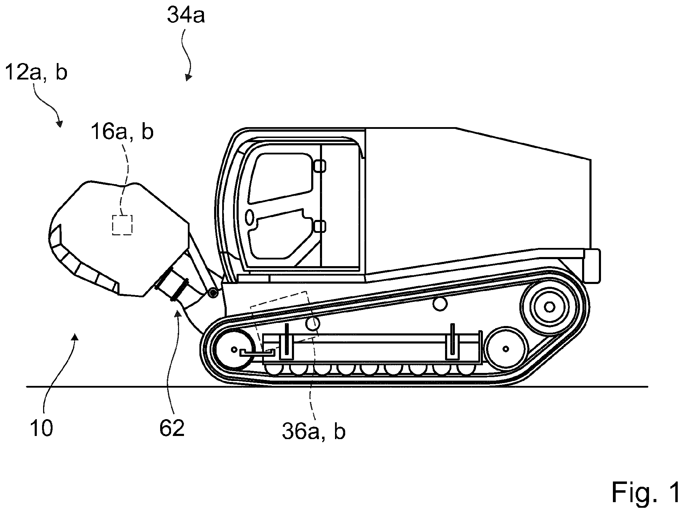

Fig. 1 zeigt ein System 34a mit einem Trägerfahrzeug 10 und einem Anbaugerät 12a. Das Trägerfahrzeug 10 ist als ein Raupenfahrzeug ausgebildet. Alternativ könnte das Trägerfahrzeug 10 jedoch auch als jedes beliebige, dem Fachmann als sinnvoll erscheinende, Fahrzeug ausgebildet sein, beispielsweise als ein Traktor, ein Bagger, ein Kompaktlader oder als ein Radlader. Das Anbaugerät 12a ist an dem Trägerfahrzeug 10 angeordnet. Das Anbaugerät 12a ist als ein Mulcher ausgebildet. Alternativ könnte das Anbaugerät 12a auch als eine Fräse, insbesondere eine Schneefräse, Stockfräse oder Rodefräse, ausgebildet sein. Das Anbaugerät 12a ist zu einer Verwendung mit einer Vielzahl von Trägerfahrzeugen, insbesondere einer Vielzahl von Arten von Trägerfahrzeugen und insbesondere auch mit dem Trägerfahrzeug 10 vorgesehen. Das Trägerfahrzeug 10 weist eine Lagereinheit 62 auf. Die Lagereinheit 62 kooperiert in einem montierten Zustand mit korrespondierenden Lagermitteln (nicht dargestellt) des Anbaugeräts 12a. Die korrespondierenden Lagermittel des Anbaugeräts 12a können mit weiteren Lagereinheiten (nicht dargestellt) einer Vielzahl von Arten von Trägerfahrzeugen kooperieren.

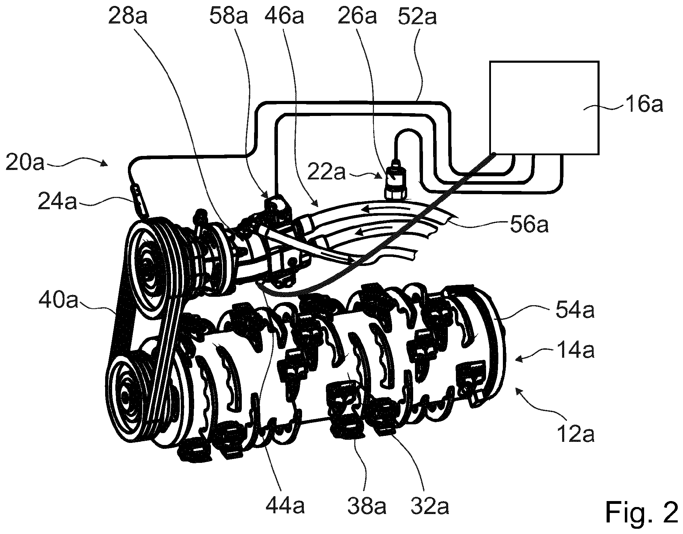

Ein Teil des Anbaugeräts 12a ist in Fig. 2 näher dargestellt. Das Anbaugerät 12a weist eine Funktionseinheit 14a auf. Die Funktionseinheit 14a weist eine Zerkleinerungseinheit 32a auf. Die Zerkleinerungseinheit 32a weist einen Rotor 54a auf. Die Zerkleinerungseinheit 32a weist eine Vielzahl von Schneidwerkzeugen 38a auf. Die Schneidwerkzeuge 38a sind an dem Rotor 54a angeordnet. Die Schneidwerkzeuge 38a sind zueinander identisch ausgebildet, weshalb in den Figuren nur eines der Schneidwerkzeuge 38a mit einem Bezugszeichen versehen ist.

Die Funktionseinheit 14a weist einen Axialkolbenverstellmotor 28a zu einem Antrieb des Rotors 54a auf. Der Axialkolbenverstellmotor 28a wandelt eine hydraulische Energie in eine mechanische Energie um. Der Axialkolbenverstellmotor 28a weist eine Rotoreinheit (nicht dargestellt) auf. Die Rotoreinheit ist innerhalb eines Innenraums (nicht dargestellt) des Axialkolbenverstellmotors 28a angeordnet. Der Innenraum dient einer Aufnahme von Hydraulikflüssigkeit, welche die hydraulische Energie an die Rotoreinheit überträgt. Die mechanische Energie erzeugt ein Drehmoment der Rotoreinheit. Der Axialkolbenverstellmotor 28a überträgt das Drehmoment über eine Energieübertragungseinheit 40a, und zwar insbesondere einen Riementrieb, an den Rotor 54a.

Die Funktionseinheit 14a ist zu einer Energieversorgung durch das Trägerfahrzeug 10 vorgesehen. Das Trägerfahrzeug 10 weist eine Versorgungseinheit 36a auf. Die Versorgungseinheit 36a ist zu einer Versorgung der Funktionseinheit 14a mit Energie vorgesehen. Die Versorgungseinheit 36a weist eine Hydraulikpumpe auf. Die Hydraulikpumpe könnte als eine elektrisch angetriebene Hydraulikpumpe ausgebildet sein. Alternativ könnte die Versorgungseinheit 36a eine verbrennungsgetriebene Hydraulikpumpe aufweisen. Das Trägerfahrzeug 10 weist eine Verbindungseinheit 46a auf. Die Verbindungseinheit 46a ist dazu vorgesehen, eine Energieübertragung von der Hydraulikpumpe zu dem Anbaugerät 12a bereitzustellen. Die Verbindungseinheit 46a weist mehrere Schläuche 56a auf. Die Schläuche 56a sind zueinander identisch ausgebildet, weshalb in den Figuren nur einer der Schläuche 56a ein Bezugszeichen erhält. Die Schläuche 56a stellen eine Abfuhr und eine Zufuhr der Hydraulikflüssigkeit bereit. Die Flussrichtung der Hydraulikflüssigkeit innerhalb der Schläuche 56a ist durch Pfeile dargestellt.

Das Anbaugerät 12a weist eine Verstelleinheit 44a auf. Die Verstelleinheit 44a dient einer Einstellung eines minimalen Schluckvolumens des Axialkolbenverstellmotors 28a. Die Verstelleinheit 44a dient einer Einstellung eines maximalen Schluckvolumens des Axialkolbenverstellmotors 28a. Die Verstelleinheit 44a weist zu einer Änderung des minimalen und/oder maximalen Schluckvolumens ein Magnetventil auf. Bei einer Öffnung und Schließung des Magnetventils verringert oder erhöht sich ein Volumen des Innenraums des Axialkolbenverstellmotors 28a. Das Anbaugerät 12a weist eine Durchlasseinheit 58a auf. Die Durchlasseinheit 58a dient einer Einstellung eines Schluckvolumens des Axialkolbenverstellmotors 28a. Die Durchlasseinheit 58a kann beispielsweise ein weiteres Magnetventil und/oder eine Magnetklappe aufweisen. Die Verstelleinheit 44a und die Durchlasseinheit 58a weisen jeweils eine Motoreinheit (nicht dargestellt) auf. Die Motoreinheiten können beispielsweise Elektromagneten aufweisen. Die Elektromagneten stellen ein Öffnen und Schließen der Magnetventile und/oder der Magnetklappe bereit.

Das Anbaugerät 12a weist eine Steuereinheit 16a auf. Die Steuereinheit 16a steuert in zumindest einem Betriebszustand zumindest einen Grenzwert eines Betriebsparameters der Funktionseinheit 14a. Die Steuereinheit 16a steuert den Grenzwert in dem Betriebszustand automatisch. Der Betriebsparameter ist als ein Schluckvolumen des Anbaugeräts 12a ausgebildet. Der Grenzwert ist als das minimale Schluckvolumen ausgebildet. Die Steuereinheit 16a steuert einen weiteren Grenzwert in dem Betriebszustand automatisch. Der weitere Grenzwert ist als das maximale Schluckvolumen ausgebildet.

Die Steuereinheit 16a steuert den Grenzwert und den weiteren Grenzwert des Betriebsparameters der Funktionseinheit 14a elektrisch. Die Steuereinheit 16a regelt den Betriebsparameter der Funktionseinheit 14a elektrisch. Die Steuereinheit 16a ist durch eine Übertragungseinheit 52a mit der zweiten Verstelleinheit 44a verbunden. Die Übertragungseinheit 52a ist als eine Datenleitung ausgebildet. Im Folgenden genannte weitere Übertragungseinheiten sind identisch zu der Übertragungseinheit 52a ausgebildet, weshalb auf eine nähere Beschreibung der weiteren Übertragungseinheiten verzichtet wird.

Das Anbaugerät 12a weist eine funktionseinheitszugeordnete Sensoreinheit 20a auf. Die Sensoreinheit 20a dient einer Erfassung eines Werts einer Drehzahl des Rotors 54a. Die Sensoreinheit 20a stellt den Wert der Steuereinheit 16a zu einer Verarbeitung bereit. Die Sensoreinheit 20a ist durch eine weitere Übertragungseinheit 52a mit der Steuereinheit 16a verbunden. Die Sensoreinheit 20a weist eine Drehzahlerfassungseinheit 24a auf. Die Drehzahlerfassungseinheit 24a weist eine Lichtschranke auf. Alternativ und/oder zusätzlich könnte die Drehzahlerfassungseinheit 24a ein Mikrofon und/oder einen Vibrationssensor und/oder einen Beschleunigungssensor aufweisen. Die Sensoreinheit 20a ist in einem Nahbereich des Rotors 54a angeordnet. Die Sensoreinheit 20a misst die Drehzahl des Rotors 54a. Alternativ könnte die Sensoreinheit 20a in einem Nahbereich der Energieübertragungseinheit 40a angeordnet sein und zu einer Ermittlung der Drehzahl des Rotors 54a eine weitere Drehzahl des Axialkolbenverstellmotors 28a messen. Alternativ könnte die Sensoreinheit 20a einstückig mit dem Axialkolbenverstellmotor 28a ausgestaltet sein.

Das Anbaugerät 12a weist eine trägerfahrzeugzugeordnete weitere Sensoreinheit 22a auf. Die weitere Sensoreinheit 22a dient einer Erfassung eines Werts eines Eingangsdrucks des Trägerfahrzeugs 10. Die weitere Sensoreinheit 22a stellt den Wert der Steuereinheit 16a zu einer Verarbeitung bereit. Die weitere Sensoreinheit 22a ist durch eine weitere Übertragungseinheit 52a mit der Steuereinheit 16a verbunden. Die weitere Sensoreinheit 22a weist eine Druckerfassungseinheit 26a auf. Die Druckerfassungseinheit 26a weist einen piezoelektrischen Drucksensor auf. Alternativ und/oder zusätzlich könnte die Druckerfassungseinheit 26a ein gewickeltes Federelement und/oder einen Dehnungsmessstreifen aufweisen. Die weitere Sensoreinheit 22a ist in einem Nahbereich der Verbindungseinheit 46a angeordnet.

Die Steuereinheit 16a steuert den Grenzwert und den weiteren Grenzwert des Betriebsparameters der Funktionseinheit 14a auf einen Sollwert und einen weiteren Sollwert. Der Sollwert und der weitere Sollwert sind durch die Drehzahl des Rotors 54a und den Eingangsdruck des Trägerfahrzeugs 10 definiert. Der Sollwert ist als ein minimales Schluckvolumen ausgebildet, welches in einem belastungsfreien Zustand des Anbaugeräts 12a eine vordefinierte Nenndrehzahl des Rotors 54a erzeugt. Der weitere Sollwert ist als ein maximales Schluckvolumen ausgebildet, bei dessen Überschreitung eine Beschädigung des Axialkolbenverstellmotors 28a erfolgen würde. Die Steuereinheit 16a weist einen Algorithmus auf, welcher unter Verwendung der Drehzahl und des Eingangsdrucks des Trägerfahrzeugs 10 den Sollwert und den weiteren Sollwert ermittelt.

Die Steuereinheit 16a steuert durch eine Steuerung des Grenzwerts des Betriebsparameters der Funktionseinheit 14a einen weiteren Betriebsparameter der Funktionseinheit 14a. Der weitere Betriebsparameter ist als eine Leistung der Funktionseinheit 14a ausgestaltet. Der weitere Betriebsparameter ist von dem Betriebsparameter, der Drehzahl und dem Eingangsdruck abhängig. Der Algorithmus ermittelt unter Verwendung der Drehzahl, des Eingangsdrucks und des Betriebsparameters einen Maximalwert des weiteren Betriebsparameters. Die Steuereinheit 16 regelt den Betriebsparameter auf einen Wert, welcher den weiteren Betriebsparameter maximiert.

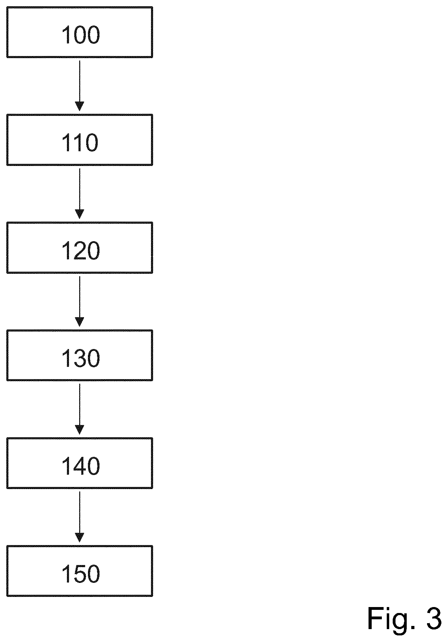

In Fig. 3 ist ein schematisches Verlaufsdiagramm eines Verfahrens zu einem Betrieb des Anbaugeräts 12a dargestellt. In einem Aktivierungsschritt 100a wird das Trägerfahrzeug 10 und das Anbaugerät 12a in den Betriebszustand überführt. In einem Messschritt 110a ermittelt die weitere Sensoreinheit 22a einen Wert des Eingangsdrucks des Trägerfahrzeugs 10. Die weitere Sensoreinheit 22a überträgt den Wert über die Übertragungseinheit 52a an die Steuereinheit 16a. Die Steuereinheit 16a ermittelt unter Verwendung des Werts des Eingangsdrucks den weiteren Sollwert des maximalen Schluckvolumens. Die Steuereinheit 16a weist eine Speichereinheit (nicht dargestellt) auf. Die Speichereinheit ist als ein gängiges elektronisches Speichermedium ausgebildet. Die Steuereinheit 16a speichert den weiteren Sollwert des maximalen Schluckvolumens durch die Speichereinheit.

Der Messschritt 110a folgt hierbei auf den Aktivierungsschritt 100a. Nach dem Messschritt 110a und während des Betriebs des Anbaugeräts 12a ermittelt die weitere Sensoreinheit 22a weiterhin den Wert des Eingangsdrucks und überträgt diesen an die Steuereinheit 16a. In einem Stellschritt 120a steuert die Steuereinheit 16a die Verstelleinheit 44a. Die Steuereinheit 16a öffnet oder schließt das Magnetventil der Verstelleinheit 44a durch eine Steuerung des Elektromagnets der Verstelleinheit 44a. Die Steuereinheit 16a steuert das maximale Schluckvolumen automatisch auf den weiteren Sollwert. Der Stellschritt 120a folgt hierbei auf den Messschritt 110a. Die Steuereinheit 16a überwacht nach dem Stellschritt 120a das maximale Schluckvolumen. Bei einer Änderung des Werts des Eingangsdrucks ermittelt die Steuereinheit 16a unter Verwendung des neuen Werts des Eingangsdrucks einen neuen weiteren Sollwert und wiederholt den Stellschritt 120a.

In einem weiteren Messschritt 130a wird das Schluckvolumen des Axialkolbenverstellmotors 28a von dem maximalen Schluckvolumen aus stetig gesenkt. Die Steuereinheit 16a regelt die Durchlasseinheit 58a zu einer Regelung des Schluckvolumens automatisch. Die Steuereinheit 16a schließt das Magnetventil und/oder die Magnetklappe der Durchlasseinheit 58a durch eine Regelung der Motoreinheit der Durchlasseinheit 58a. Während eines Senkens des Schluckvolumens steigt die Drehzahl des Rotors 54a an. Die erste Sensoreinheit 20a ermittelt während eines Senkens des Schluckvolumens einen Wert der Drehzahl des Rotors 54a. Die erste Sensoreinheit 20a überträgt den Wert über die Übertragungseinheit 52a an die Steuereinheit 16a. Die Steuereinheit 16a überwacht den Wert automatisch. Wenn der Wert eine vordefinierte Nenndrehzahl erreicht, stoppt die Steuereinheit 16a das Senken des Schluckvolumens. Der Wert ist als der Sollwert des minimalen Schluckvolumens ausgebildet. Die Steuereinheit 16a speichert den Sollwert des minimalen Schluckvolumens durch die Speichereinheit. Bei einer Änderung des minimalen Schluckvolumens und/oder des maximalen Schluckvolumens, beispielsweise durch eine Verwendung des Anbaugeräts 12a mit einem weiteren Trägerfahrzeug (nicht dargestellt), welches von dem Trägerfahrzeug 10 verschieden ist, kann die Steuereinheit 16a bei einem erneuten Montieren des Anbaugeräts 12a an das Trägerfahrzeug 10 den gespeicherten Sollwert und/oder weiteren Sollwert verwenden. Die Messschritte 110a, 130a entfallen in diesem Fall. Der weitere Messschritt 130a folgt auf den Stellschritt 120a. Nach dem weiteren Messschritt 130a und während des Betriebs des Anbaugeräts 12a ermittelt die Sensoreinheit 20a weiterhin den Wert der Drehzahl und überträgt diesen an die Steuereinheit 16a. In einem weiteren Stellschritt 140a steuert die Steuereinheit 16a die Verstelleinheit 44a. Die Steuereinheit 16a öffnet oder schließt das Magnetventil der Verstelleinheit 44a durch eine Steuerung des Elektromagnets der Verstelleinheit 44a. Die Steuereinheit 16a steuert das minimale Schluckvolumen des Axialkolbenverstellmotors 28a automatisch auf das momentane Schluckvolumen. Der weitere Stellschritt 140a folgt auf den Messschritt 110a oder auf den Aktivierungsschritt 100a im Fall eines bereits vorhandenen Sollwerts. Die Steuereinheit 16a überwacht nach dem weiteren Stellschritt 140a das minimale Schluckvolumen. Bei einer Änderung des Werts des Eingangsdrucks ermittelt die Steuereinheit 16a unter Verwendung des neuen Werts des Eingangsdrucks einen neuen Sollwert und wiederholt den weiteren Stellschritt 140a.

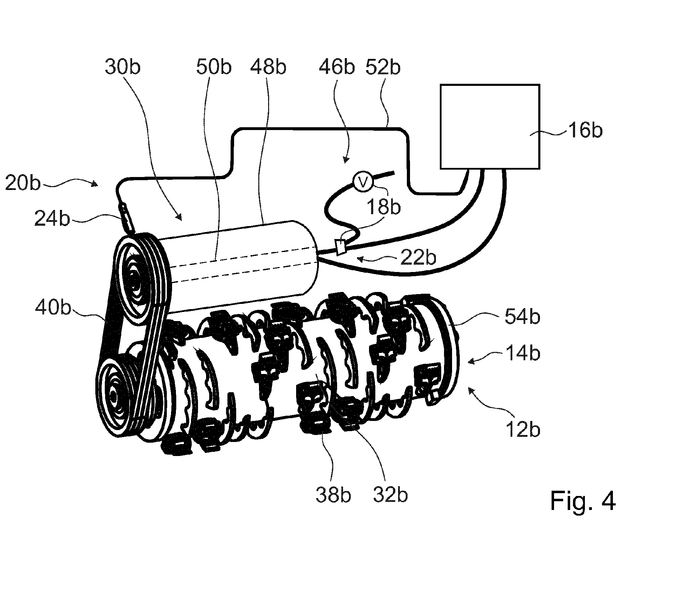

In einem Regelschritt 150a ermittelt die Steuereinheit 16a unter Verwendung des Werts der Drehzahl des Rotors 54a und dem Wert des Eingangsdrucks des Trägerfahrzeugs 10 einen Optimalwert des Schluckvolumens. Der Wert des Eingangsdrucks des Trägerfahrzeugs 10 wird von der weiteren Sensoreinheit 22a ermittelt und durch die Übertragungseinheit 52a an die Steuereinheit 16a übertragen. Der Optimalwert ist ein Wert des Schluckvolumens, bei dem eine Leistung der Funktionseinheit 14a maximal ist. Die Steuereinheit 16a regelt das Schluckvolumen auf den Optimalwert. Die Steuereinheit 16a öffnet oder schließt das Magnetventil und/oder die Magnetklappe der Durchlasseinheit 58a durch eine Regelung des Elektromagnets der Durchlasseinheit 58a. Die Steuereinheit 16a regelt die Leistung der Funktionseinheit 14a auf einen Maximalwert. Die Steuereinheit 16a überwacht nach dem Regelschritt 150a das Schluckvolumen. Bei einer Änderung der von den Sensoreinheiten 20a, 22a übermittelten Werte wiederholt die Steuereinheit 16a den Regelschritt 150a. Der Regelschritt 150a folgt hierbei auf den weiteren Stellschritt 140a.In Fig. 4 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Verfahrensschritte und bezüglich gleich bleibender Bauteile, insbesondere in Bezug auf Verfahrensschritte und/oder Bauteile mit gleichen Bezugszeichen, grundsätzlich auch auf die Zeichnungen und/oder die Beschreibung der anderen Ausführungsbeispiele, insbesondere der Fig. 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In dem Ausführungsbeispiel der Fig. 4 ist der Buchstabe a durch den Buchstaben b ersetzt.

Fig. 4 zeigt einen Teil eines weiteren Anbaugeräts 12b. Das weitere Anbaugerät 12b ist zu einer Verwendung mit einer Vielzahl von Trägerfahrzeugen, insbesondere einer Vielzahl von Arten von Trägerfahrzeugen und insbesondere auch mit dem Trägerfahrzeug 10 vorgesehen. Das weitere Anbaugerät 12b weist anstatt des Axialkolbenverstellmotors 28a einen Elektromotor 30b auf. Der Elektromotor 30b weist einen Magnetrotor 50b auf. Der Elektromotor 30b weist einen Stator 48b auf. Eine weitere Steuereinheit 16b steuert einen elektrischen Grenzwert eines Betriebsparameters des weiteren Anbaugeräts 12b. Der Betriebsparameter ist als ein elektrischer Strom ausgebildet. Alternativ könnte der Betriebsparameter als eine elektrische Spannung und/oder eine elektrische Leistung ausgebildet sein. Der elektrische Grenzwert ist als ein maximaler, an eine Funktionseinheit 14b gelieferter, Strom ausgebildet. Der elektrische Grenzwert weist einen Schwellwert auf. Bei einem Überschreiten des Schwellwerts kann es zu einer Beschädigung des Elektromotors 30b kommen. Der elektrische Grenzwert ist insbesondere abhängig von einer von einer Versorgungseinheit 36b bereitgestellten Spannung und von einem maximal von der Versorgungseinheit 36b bereitgestellten Strom.

Eine Verbindungseinheit 46b ist als eine elektrische Leitung ausgebildet. Eine Sensoreinheit 22b weist eine Stromerfassungseinheit 18b auf. Die Stromerfassungseinheit 18b weist einen Spannungssensor auf. Der Spannungssensor greift eine Spannung der Verbindungseinheit 46b ab. Die Stromerfassungseinheit 18b weist einen Stromsensor auf. Der Stromsensor ist zwischen der Verbindungseinheit 46b und dem Elektromotor 30b geschaltet. Die weitere Sensoreinheit 22b ermittelt den maximalen von der Versorgungseinheit 36b bereitgestellten Strom. Die weitere Sensoreinheit 22b ermittelt die von der weiteren Versorgungseinheit 36b bereitgestellte Spannung. Die Steuereinheit 16b ist durch die Übertragungseinheit 52b mit dem Elektromotor 30b verbunden. Die Steuereinheit 16b weist eine Pulsweitenmodulationsfunktion auf. Die Steuereinheit 16b ermittelt unter Verwendung des maximal von der Versorgungseinheit 36b bereitgestellten Stroms, der von der Versorgungseinheit 36b bereitgestellten Spannung und dem Schwellwert einen Sollwert der Pulsweite. Die Steuereinheit 16b steuert die Pulsweite auf den Sollwert.

### Bezugszeichen

- 10: Trägerfahrzeug
- 12: Anbaugerät
- 14: Funktionseinheit
- 16: Steuereinheit
- 18: Stromerfassungseinheit
- 20: Sensoreinheit
- 22: Sensoreinheit
- 24: Drehzahlerfassungseinheit
- 26: Druckerfassungseinheit
- 28: Axialkolbenverstellmotor
- 30: Elektromotor
- 32: Zerkleinerungseinheit
- 34: System
- 36: Versorgungseinheit
- 38: Schneidwerkzeug
- 40: Energieübertragungseinheit
- 44: Verstelleinheit
- 46: Verbindungseinheit
- 48: Stator
- 50: Magnetrotor
- 52: Übertragungseinheit
- 54: Rotor
- 56: Schlauch
- 58: Durchlasseinheit
- 62: Lagereinheit
- 100: Aktivierungsschritt
- 110: Messschritt
- 120: Stellschritt
- 130: Messschritt
- 140: Stellschritt
- 150: Regelschritt

## Patentansprüche

1. Anbaugerät (12a-b), insbesondere Fräse und/oder Mulcher, zur Verwendung mit einem Trägerfahrzeug (10), mit zumindest einer Funktionseinheit (14a-b), welche zu einer Energieversorgung durch das Trägerfahrzeug (10) vorgesehen ist, und mit zumindest einer Steuereinheit (16a-b), **dadurch gekennzeichnet, dass** die Steuereinheit dazu eingerichtet ist, in zumindest einem Betriebszustand zumindest einen Grenzwert eines Betriebsparameters der Funktionseinheit (14a-b) automatisch zu steuern und/oder regeln.

2. Anbaugerät (12a-b) nach Anspruch 1, **dadurch gekennzeichnet, dass** die Steuereinheit (16a-b) dazu eingerichtet ist, den Grenzwert des Betriebsparameters der Funktionseinheit (14a-b) und/oder den Betriebsparameter der Funktionseinheit (14a-b) in dem Betriebszustand elektrisch zu steuern und/oder regeln.

3. Anbaugerät (12a-b) nach Anspruch 1 oder 2, **dadurch gekennzeichnet, dass** die Steuereinheit (16a-b) dazu eingerichtet ist, in dem Betriebszustand den Grenzwert des Betriebsparameters der Funktionseinheit (14a-b) auf einen Sollwert zu steuern und/oder regeln.

4. Anbaugerät (12a-b) nach Anspruch 3, **dadurch gekennzeichnet, dass** die Steuereinheit (16a-b) dazu eingerichtet ist, in dem Betriebszustand durch eine Steuerung und/oder Regelung des Grenzwerts des Betriebsparameters der Funktionseinheit (14a-b) einen weiteren Betriebsparameter der Funktionseinheit (14a-b) zu steuern und/ oder regeln.

5. Anbaugerät (12a-b) nach einem der vorhergehenden Ansprüche, **gekennzeichnet durch** zumindest eine Sensoreinheit (20a-b) zur Erfassung zumindest eines Werts zumindest eines Betriebsparameters der Funktionseinheit (14a-b), wobei die Sensoreinheit (20a-b) dazu eingerichtet ist, in dem Betriebszustand diesen Wert der Steuereinheit (16a-b) zu einer Verarbeitung bereitzustellen.

6. Anbaugerät (12a-b) nach einem der vorhergehenden Ansprüche, **gekennzeichnet durch** zumindest eine Sensoreinheit (22a-b) zur Erfassung zumindest eines Werts zumindest eines Betriebsparameters des Trägerfahrzeugs (10), wobei die Sensoreinheit (22a-b) dazu eingerichtet ist, in dem Betriebszustand diesen Wert der Steuereinheit (16a-b) zu einer Verarbeitung bereitzustellen.

7. Anbaugerät (12a-b) nach Anspruch 5 oder 6, **dadurch gekennzeichnet, dass** die Sensoreinheit (20a-b) eine Drehzahlerfassungseinheit (24a-b) aufweist.

8. Anbaugerät (12a) nach einem der Ansprüche 5 bis 7, **dadurch gekennzeichnet, dass** die Sensoreinheit (22a) eine Druckerfassungseinheit (26a) aufweist.

9. Anbaugerät (12a) nach einem der vorhergehenden Ansprüche, **dadurch gekennzeichnet, dass** die Funktionseinheit (14a) zumindest einen Axialkolbenverstellmotor (28a) aufweist.

10. Anbaugerät (12a) nach Anspruch 9, **dadurch gekennzeichnet, dass** der Grenzwert des Betriebsparameters der Funktionseinheit (14a) ein minimales oder maximales Schluckvolumen des Axialkolbenverstellmotors (28a) ist.

11. Anbaugerät (12b) nach einem der Ansprüche 1 bis 8, **dadurch gekennzeichnet, dass** die Funktionseinheit (14b) zumindest einen Elektromotor (30b) aufweist und der Grenzwert des Betriebsparameters der Funktionseinheit (14b) ein elektrischer Grenzwert ist.

12. Anbaugerät (12a-b) nach einem der vorhergehenden Ansprüche, **dadurch gekennzeichnet, dass** die Funktionseinheit (14a-b) zumindest eine Zerkleinerungseinheit (32a-b) aufweist.

13. System (34a) mit zumindest einem Anbaugerät (12a-b) nach einem der vorhergehenden Ansprüche und dem Trägerfahrzeug (10).

14. Verfahren zum Betrieb eines Anbaugeräts (12a-b), insbesondere nach einem der Ansprüche 1 bis 12, mit zumindest einer Funktionseinheit (14a-b), welche von einem Trägerfahrzeug (10) mit Energie versorgt wird, **dadurch gekennzeichnet, dass** zumindest ein Grenzwert eines Betriebsparameters der Funktionseinheit (14a-b) automatisch gesteuert und/oder geregelt wird.

## Claims

1. An attachment device (12a-b), in particular milling machine and/or mulcher, for use with a carrier vehicle (10), with at least one functional unit (14a-b) which is configured for a supply of energy by way of the carrier vehicle (10), and with at least one control unit (16a-b), **characterized in that** the control unit is configured to automatically control and/or regulate, in at least one operating state, at least one limit value of an operating parameter of the functional unit (14a-b).

2. The attachment device (12a-b) according to claim 1, **characterized in that** the control unit (16a-b) is configured to electrically control and/or regulate the limit value of the operating parameter of the functional unit (14a-b) and/or the operating parameter of the functional unit (14a-b) in the operating state.

3. The attachment device (12a-b) according to claim 1 or 2, **characterized in that** the control unit (16a-b) is configured to control and/or regulate, in the operating state, the limit value of the operating parameter of the functional unit (14a-b) to a setpoint value.

4. The attachment device (12a-b) according to claim 3, **characterized in that** the control unit (16a-b) is configured to control and/or regulate, in the operating state, a further operating parameter of the functional unit (14a-b) by a control and/or regulation of the limit value of the operating parameter of the functional unit (14a-b).

5. The attachment device (12a-b) according to any one of the preceding claims, **characterized by** at least one sensor unit (20a-b) for detection of at least one value of at least one operating parameter of the functional unit (14a-b), wherein the sensor unit (20a-b) is configured to provide, in the operating state, said value to the control unit (16a-b) for processing.

6. The attachment device (12a-b) according to any one of the preceding claims, **characterized by** at least one sensor unit (22a-b) for detection of at least one value of at least one operating parameter of the carrier vehicle (10), wherein the sensor unit (22a-b) is configured to provide, in the operating state, said value to the control unit (16a-b) for processing.

7. The attachment device (12a-b) according to claim 5 or 6, **characterized in that** the sensor unit (20a-b) has a rotational speed detection unit (24a-b).

8. The attachment device (12a) according to any one of claims 5 to 7, **characterized in that** the sensor unit (22a) has a pressure detection unit (26a).

9. The attachment device (12a) according to any one of the preceding claims, **characterized in that** the functional unit (14a) has at least one axial piston adjustment motor (28a).

10. The attachment device (12a) according to claim 9, **characterized in that** the limit value of the operating parameter of the functional unit (14a) is a minimum or maximum displacement volume of the axial piston adjustment motor (28a).

11. The attachment device (12b) according to any one of claims 1 to 8, **characterized in that** the functional unit (14b) has at least one electric motor (30b), and the limit value of the operating parameter of the functional unit (14b) is an electric limit value.

12. The attachment device (12a-b) according to any one of the preceding claims, **characterized in that** the functional unit (14a-b) has at least one comminution unit (32a-b).

13. A system (34a) with at least one attachment device (12a-b) according to any one of the preceding claims and with the carrier vehicle (10).

14. A method for operating an attachment device (12a-b), in particular according to any one of claims 1 to 12, with at least one functional unit (14a-b) which is supplied with energy by a carrier vehicle (10), **characterized in that** at least one limit value of an operating parameter of the functional unit (14a-b) is controlled and/or regulated automatically.

## Revendications

1. Outil rapporté (12a-b), en particulier fraise et/ou broyeur, destiné à être utilisé avec un véhicule porteur (10), comprenant au moins une unité fonctionnelle (14a-b) qui est prévue pour une alimentation en énergie par le véhicule porteur (10), et comprenant au moins une unité de commande (16a-b), **caractérisé en ce que** l'unité de commande est prévue pour commander et/ou régler automatiquement, dans au moins un état de fonctionnement, au moins une valeur limite d'un paramètre de fonctionnement de l'unité fonctionnelle (14a-b).

2. Outil rapporté (12a-b) selon la revendication 1, **caractérisé en ce que** l'unité de commande (16a-b) est prévue pour commander et/ou régler électriquement la valeur limite du paramètre de fonctionnement de l'unité fonctionnelle (14a-b) et/ou le paramètre de fonctionnement de l'unité fonctionnelle (14a-b) dans l'état de fonctionnement.

3. Outil rapporté (12a-b) selon la revendication 1 ou 2, **caractérisé en ce que** l'unité de commande (16a-b) est prévue pour commander et/ou régler, dans l'état de fonctionnement, la valeur limite du paramètre de fonctionnement de l'unité fonctionnelle (14a-b) à une valeur de consigne.

4. Outil rapporté (12a-b) selon la revendication 3, **caractérisé en ce que** l'unité de commande (16a-b) est prévue pour commander et/ou régler, dans l'état de fonctionnement, un autre paramètre de fonctionnement de l'unité fonctionnelle (14a-b) par une commande et/ou un réglage de la valeur limite du paramètre de fonctionnement de l'unité fonctionnelle (14a-b).

5. Outil rapporté (12a-b) selon l'une quelconque des revendications précédentes, **caractérisé par** au moins une unité de capteur (20a-b) pour détecter au moins une valeur d'au moins un paramètre de fonctionnement de l'unité fonctionnelle (14a-b), l'unité de capteur (20a-b) étant prévue pour mettre à disposition, dans l'état de fonctionnement, cette valeur de l'unité de commande (16a-b) pour un traitement.

6. Outil rapporté (12a-b) selon l'une quelconque des revendications précédentes, **caractérisé par** au moins une unité de capteur (22a-b) pour détecter au moins une valeur d'au moins un paramètre de fonctionnement du véhicule porteur (10), l'unité de capteur (22a-b) étant prévue pour mettre à disposition, dans l'état de fonctionnement, cette valeur de l'unité de commande (16a-b) pour un traitement.

7. Outil rapporté (12a-b) selon la revendication 5 ou 6, **caractérisé en ce que** l'unité de capteur (20a-b) présente une unité de détection de vitesse de rotation (24a-b).

8. Outil rapporté (12a) selon l'une quelconque des revendications 5 à 7, **caractérisé en ce que** l'unité de capteur (22a) présente une unité de détection de pression (26a).

9. Outil rapporté (12a) selon l'une quelconque des revendications précédentes, **caractérisé en ce que** l'unité fonctionnelle (14a) présente au moins un moteur de réglage à piston axial (28a).

10. Outil rapporté (12a) selon la revendication 9, **caractérisé en ce que** la valeur limite du paramètre de fonctionnement de l'unité fonctionnelle (14a) est un volume d'absorption minimal ou maximal du moteur de réglage à piston axial (28a).

11. Outil rapporté (12b) selon l'une quelconque des revendications 1 à 8, **caractérisé en ce que** l'unité fonctionnelle (14b) présente au moins un moteur électrique (30b) et la valeur limite du paramètre de fonctionnement de l'unité fonctionnelle (14b) est une valeur limite électrique.

12. Outil rapporté (12a-b) selon l'une quelconque des revendications précédentes, **caractérisé en ce que** l'unité fonctionnelle (14a-b) présente au moins une unité de comminution (32a-b).

13. Système (34a) comprenant au moins un outil rapporté (12a-b) selon l'une quelconque des revendications précédentes et le véhicule porteur (10).

14. Procédé de fonctionnement d'un outil rapporté (12a-b), en particulier selon l'une quelconque des revendications 1 à 12, comprenant au moins une unité fonctionnelle (14a-b) qui est alimentée en énergie par un véhicule porteur (10), **caractérisé en ce qu'**au moins une valeur limite d'un paramètre de fonctionnement de l'unité fonctionnelle (14a-b) est commandée et/ou réglée automatiquement.
